# EUROPEAN PATENT APPLICATION

(11) **EP 4 566 901 A1**
(43) Date of publication of application: **11.06.2025**
(21) Application number: 23214901.3
(22) Date of filing: 07.12.2023
(51) Int. Cl.: B60W 20/16, B60K 6/20, B60W 10/06, B60W 10/08, B60W 10/26, B60W 10/30, B60W 20/10, B60W 20/11, B60W 20/12, B60W 20/13, B60W 20/40, B60W 30/188, B60W 40/04, B60W 40/076, B60W 50/00

(54) **EXHAUST AFTERTREATMENT SYSTEM FOR HYBRID VEHICLE**

(71) Applicant: VOLVO TRUCK CORPORATION, 405 08 Göteborg (SE)
(72) Inventor: Svraka, Irman, 417 53 Göteborg (SE); Högström, Åsa, 417 04 Göteborg (SE)
(74) Representative: Valea AB

(57) **Abstract**

A method for operating a hybrid vehicle comprising an internal combustion engine (201), an electric machine (202), and an exhaust aftertreatment system (100), comprising:
predicting an upcoming power demand for propulsion of the vehicle during a prediction time horizon comprising at least a first time interval,
determining whether at least one predetermined condition is fulfilled, the at least one predetermined condition comprising a first condition which is fulfilled when the electric machine is expected to be able to provide sufficient output power to satisfy the predicted power demand during the first time interval without using the internal combustion engine,
during the first time interval, in response to determining that the at least one predetermined condition is fulfilled, controlling the electric machine to propel the vehicle, and controlling the internal combustion engine to achieve a target condition for conditioning of the exhaust aftertreatment system.

## Description

### TECHNICAL FIELD

The disclosure relates generally to an emission control system. In particular aspects, the disclosure relates to exhaust aftertreatment in hybrid vehicles. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Exhaust aftertreatment systems (EATS) are commonly used for treatment of exhausts generated by internal combustion engines in order to meet emission legislation, both for passenger cars and heavy-duty vehicles, such as trucks or buses. Exhaust aftertreatment systems are also used in hybrid vehicles utilizing both a combustion engine and an electric motor. Generally, exhaust treatment systems for diesel engines comprise several components, such as a diesel oxidation catalyst (DOC), a selective catalytic reduction (SCR) system and a diesel particulate filter (DPF). Together, these components significantly reduce the emissions of NOx and particulate matter from the combustion engine.

Components of exhaust aftertreatment systems, in particular the SCR and the DPF, need to be conditioned regularly to maintain their ability to efficiently reduce hazardous emissions from exhaust gases. For instance, the SCR stores an amount of ammonia which must be kept within certain thresholds to work optimally. When the amount of ammonia is too low, an increased amount of urea must be injected to increase the ammonia storage in the SCR, a process referred to as "buffering". Similarly, when the particulate filter is filled to a certain extent with soot, i.e., particulate matter, it loses its filtering capacity and needs to be regenerated. Regenerating the DPF may for example be performed by burning particulate matter by inducing a high temperature in the DPF. Both the buffering of the ammonia storage and the regeneration of the DPF require certain properties of the exhaust gases delivered to the EATS and can therefore not be performed during all operating conditions of the vehicle. For example, regeneration is performed when the exhaust gas temperature is high, e.g. when the vehicle operates under high load over a longer time period. When these operating conditions do not occur during normal driving, there is a risk for an impaired emission performance of the vehicle. In hybrid vehicles, there are additional challenges due to the switching between combustion engine propulsion and electric propulsion. In particular, when the combustion engine is switched off no exhaust gases are produced and the temperature in the EATS decrease, which may lead to increased emissions when the combustion engine is switched on again.

Accordingly, there is a need for an improved operation of an exhaust aftertreatment system.

### SUMMARY

According to a first aspect of the disclosure, there is provided a computer system for operating a hybrid vehicle comprising an internal combustion engine, an electric machine, and an exhaust aftertreatment system, the computer system comprising processing circuitry configured to:
predict an upcoming power demand for propulsion of the vehicle during an upcoming prediction time horizon comprising at least a first time interval,
determine whether at least one predetermined condition is fulfilled, the at least one predetermined condition comprising a first condition which is fulfilled when the electric machine is expected to be able to provide sufficient output power to satisfy the predicted power demand during the first time interval without using the internal combustion engine,
during the first time interval, in response to determining that the at least one predetermined condition is fulfilled, control the electric machine to propel the vehicle, and control the internal combustion engine to achieve a target condition for conditioning of the exhaust aftertreatment system.
The first aspect of the disclosure may seek to improve the performance of hybrid vehicles in terms of emission performance. In particular, the first aspect may seek to solve the problem of insufficient conditioning of the exhaust aftertreatment system that may occur when the vehicle frequently travels at low load. The first aspect seeks to solve this by predicting the power upcoming power demand and identify a first time interval when it is possible to propel the vehicle using solely electric power. By controlling the vehicle in an electric propulsion mode and using the combustion engine to achieve a target condition suitable for conditioning of the exhaust aftertreatment system, exhaust aftertreatment system conditioning can be performed during the first time interval without interruptions. This is particularly useful when suitable conditions for performing the conditioning would normally not be reached during extended periods of time, such as due to frequent travelling at low load. A technical benefit may include reduced emissions of the vehicle after the conditioning has been performed, i.e., after the first time interval, due to better performance of the exhaust aftertreatment system. Another technical benefit may include that breaches of emission legislation limits due to poor conditioning of the exhaust aftertreatment system may be avoided.

Optionally in some examples, including in at least one preferred example, the vehicle further comprises an electric energy storage system configured to power the electric machine, and the processing circuitry is further configured to:
monitor a state-of-charge of the electric energy storage system, and
determine whether the first condition is fulfilled based on at least the state-of-charge. Hence, an accurate determination of whether the first condition is fulfilled can be made, since the state-of-charge is an indicator of whether the electric machine will be able to provide sufficient output power. A technical benefit may include an accurate identification of a suitable time interval for conditioning of the exhaust aftertreatment system, thereby improving the emission performance of the vehicle.

Optionally in some examples, including in at least one preferred example, the at least one predetermined condition further comprises a second condition which is fulfilled when a need for conditioning of the exhaust aftertreatment system is detected. Thereby, it may be ensured that the conditioning is only performed when necessary. A technical benefit may include reduced fuel consumption due to avoidance of unnecessary conditioning.

Optionally in some examples, including in at least one preferred example, the processing circuitry is further configured to:
monitor at least one of an amount of ammonia stored in a selective catalytic reduction component of the exhaust aftertreatment system, and an amount of soot within a particulate filter of the exhaust aftertreatment system, and based on said monitoring, detect the need for conditioning of the exhaust aftertreatment system. It can thereby be ensured that the selective catalytic reduction component contains a desired amount of ammonia and/or that the amount of soot within the particulate filter is within a desired range. A technical benefit may include that the emission performance of the vehicle may be improved and that the risk for breaches of emissions legislation limits may be reduced. Furthermore, the risk of ammonia slip due to excessive amounts of ammonia within the selective catalytic reduction component may be reduced.

Optionally in some examples, including in at least one preferred example, the processing circuitry is further configured to detect the need for conditioning by detecting that the amount of ammonia stored within the selective catalytic reduction component is below an ammonia threshold level, or within a defined ammonia range, and/or by detecting that the amount of soot is above a soot threshold level, or within a defined soot range.

Optionally in some examples, including in at least one preferred example, the exhaust aftertreatment system comprises a particulate filter, and the target condition is a condition suitable for regeneration of the particulate filter. A technical benefit may include that soot clogging of the particulate filter can be avoided.

Optionally in some examples, including in at least one preferred example, the exhaust aftertreatment system comprises a selective catalytic reduction component, and the target condition is a condition suitable for buffering of ammonia in the selective catalytic reduction component. A technical benefit may include that an amount of ammonia suitable for the envisaged working temperature of the engine after the first time interval can be buffered in the selective catalytic reduction component.

Optionally in some examples, including in at least one preferred example, the processing circuity is configured to control the internal combustion engine to achieve the target condition by controlling the internal combustion engine to achieve at least one of a target mass flow of exhaust gases through the exhaust aftertreatment system, a target temperature within the exhaust aftertreatment system, a target NOx content of the exhaust gases, and a target oxygen content of the exhaust gases. A technical benefit may include an efficient conditioning of the exhaust aftertreatment system leading to improved emission performance of the vehicle.

Optionally in some examples, including in at least one preferred example, the processing circuity is further configured to:
during the first time interval, activate a heater to heat the exhaust aftertreatment system to reach a target temperature. A technical benefit may include efficient conditioning of the exhaust aftertreatment system. Further, improved emission performance when switching back to combustion engine drive may be achieved by avoiding low temperatures at the selective catalytic reduction component. This is due to the fact that the selective catalytic reduction component works more efficiently when warmed up. Furthermore, by using a heater, a more versatile system is provided since a target temperature may be achieved in more than one way.

According to a second aspect of the disclosure, there is provided a vehicle comprising an internal combustion engine, an electric machine, an exhaust aftertreatment system, and the computer system according to the first aspect. The second aspect of the disclosure may seek to improve the performance of hybrid vehicles in terms of emission performance. A technical benefit may include improved emission performance of the vehicle.

Optionally in some examples, including in at least one preferred example, the vehicle further comprises an electric energy storage system configured to power the electric machine.

According to a third aspect of the disclosure, there is provided a computer-implemented method for operating a hybrid vehicle comprising an internal combustion engine, an electric machine, and an exhaust aftertreatment system, the method comprising:
predicting, by processing circuitry of a computer system, an upcoming power demand for propulsion of the vehicle during a prediction time horizon comprising at least a first time interval,
determining, by the processing circuitry, whether at least one predetermined condition is fulfilled, the at least one predetermined condition comprising a first condition which is fulfilled when the electric machine is expected to be able to provide sufficient output power to satisfy the predicted power demand during the first time interval without using the internal combustion engine,
during the first time interval, in response to determining that at the at least one predetermined condition is fulfilled, controlling, by the processing circuitry, the electric machine to propel the vehicle, and controlling, by the processing circuitry, the internal combustion engine to achieve a target condition for conditioning of the exhaust aftertreatment system.
Advantages and advantageous features of the method according to the third aspect are largely analogous to advantages and advantageous features of the computer system according to the first aspect.

Optionally in some examples, including in at least one preferred example, the at least one predetermined condition further comprises a second condition which is fulfilled when a need for conditioning of the exhaust aftertreatment system is detected.

Optionally in some examples, including in at least one preferred example, the method comprises:
monitoring, by the processing circuitry, at least one of an amount of ammonia stored within a selective catalytic reduction component of the exhaust aftertreatment system, and an amount of soot within a particle filter of the exhaust aftertreatment system, and
based on said monitoring, detecting, by the processing circuitry, the need for conditioning of the exhaust aftertreatment system.

Optionally in some examples, including in at least one preferred example, the need for conditioning is detected when the amount of ammonia stored within the selective catalytic reduction component is below an ammonia threshold level, or within a defined ammonia range, and/or when the amount of soot is above a soot threshold level, or within a defined soot range.

Optionally in some examples, including in at least one preferred example, the aftertreatment system comprises a particulate filter, and the target condition is a condition suitable for regeneration of the particulate filter.

Optionally in some examples, including in at least one preferred example, the aftertreatment system comprises a selective catalytic reduction component, and the target condition is a condition suitable for buffering of ammonia in the selective catalytic reduction component.

Optionally in some examples, including in at least one preferred example, controlling the internal combustion engine to achieve the target condition comprises controlling the internal combustion engine to achieve at least one of a target mass flow of exhaust gases through the exhaust aftertreatment system, a target temperature within the exhaust aftertreatment system, a target NOx content of the exhaust gases, and a target oxygen content of the exhaust gases.

Optionally in some examples, including in at least one preferred example, the method further comprises:
during the first time interval, activating, by the processing circuitry, a heater to heat the exhaust aftertreatment system to reach a target temperature.

Optionally in some examples, including in at least one preferred example, determining that the first condition is fulfilled comprises determining that the state-of-charge of the electric energy storage system is sufficient to meet the predicted power demand during the first time interval.

Optionally in some examples, including in at least one preferred example, predicting the upcoming power demand comprises estimating a power demand to propel the vehicle on a first road section associated with the first time interval, based on at least one of current position data of the vehicle, topographic data for the first road section, speed limits for the first road section and driving history data for the first road section. A technical benefit may include a reliable load prediction, thereby ensuring that the conditioning can be performed during the first time interval.

Optionally in some examples, including in at least one preferred example, the at least one predetermined condition further comprises a third condition, which is fulfilled when the predicted upcoming power demand is less than a maximum output power of the electric machine during the first time interval. Thereby, a switching back to combustion engine propulsion is avoided during the first time interval. A technical benefit may include that the conditioning can be completed during the first time period leading to improved emission performance of the vehicle.

Optionally in some examples, including in at least one preferred example, controlling the internal combustion engine to achieve the target condition comprises at least one of:
- controlling a rotational speed of the internal combustion engine,
- controlling an amount of exhaust gas recirculation to the internal combustion engine,
- controlling a throttle position,
- controlling a fuel injection timing, and
- controlling an amount of injected fuel.
A technical benefit may include an efficient conditioning of the exhaust aftertreatment system, leading to improved emission performance of the vehicle.

According to a fourth aspect, there is provided a computer program product comprising program code for performing, when executed by the processing circuitry, the method of the third aspect.

According to a fifth aspect, there is provided a non-transitory computer-readable storage medium comprising instructions, which when executed by the processing circuitry, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a schematic side view of a vehicle according to an example.
**FIG. 2** schematically shows a powertrain and an exhaust aftertreatment system according to examples.
**FIG. 3** is a flow chart illustrating a method according to an example.
**FIG. 4** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

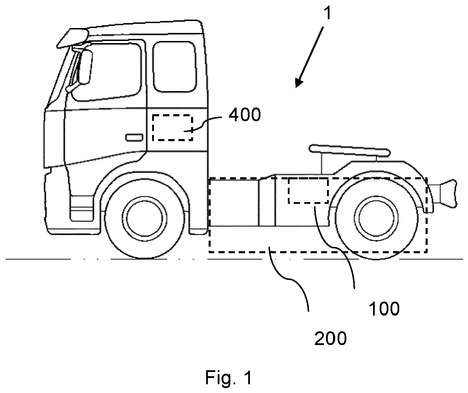

**FIG. 1** schematically depicts a hybrid vehicle 1 in the form of a heavy-duty towing truck. The vehicle 1 comprises a hybrid powertrain 200 with an internal combustion engine (not shown) and an electric machine (not shown) in the form of a motor/generator, wherein both the combustion engine and the electric machine may be used for propulsion of the vehicle 1. The vehicle 1 is further equipped with an exhaust aftertreatment system (EATS) 100 for guiding and treatment of exhausts from the internal combustion engine. A computer system 400 is provided for operating the vehicle 1, such as for operating the powertrain 200 and the EATS 100.

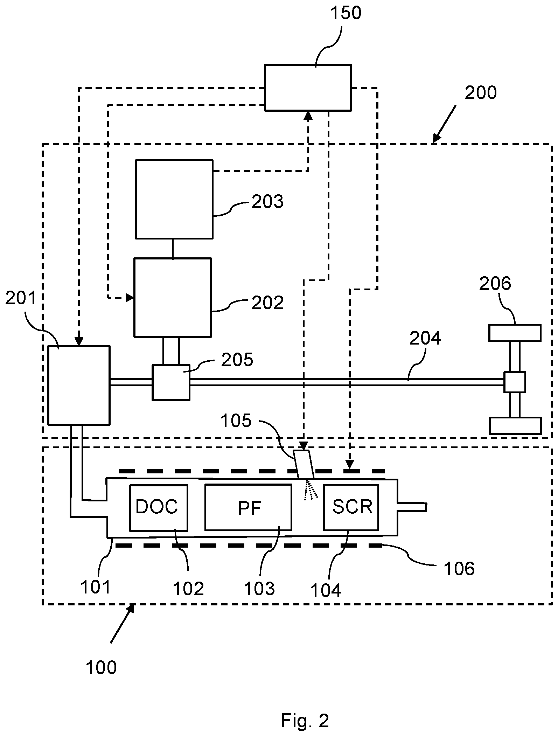

**FIG. 2** shows a powertrain 200 and an EATS 100 of a hybrid vehicle, such as of the vehicle 1 illustrated in FIG. 1. The powertrain 200 comprises an internal combustion engine 201 and an electric machine 202 in the form of a motor/generator, both being drivingly connectable to a pair of driven wheels 206 via a transmission 205 and a drive shaft 204. The electric machine 202 is electrically connected to an electric energy storage system 203, such as at least one battery pack. During operation of the vehicle 1, the electric machine 202 may be operated as a motor powered by the electric energy storage system 203, providing propulsion power for driving the driven wheels 206, or as a generator, converting kinetic energy into electric energy which is stored in the electric energy storage system 203. An electric energy conversion device (not shown), such as an inverter, may be provided for converting electric energy provided between the electric energy storage system 203 and the electric machine 202. Depending on, e.g., a current power demand of the vehicle 1, the vehicle 1 may be operated using only the electric machine 202, only the combustion engine 201, or a combination of the electric machine 202 and the combustion engine 201. In some example embodiments, the vehicle 1 may be a plug-in hybrid vehicle, in which case the electric energy storage system 203 can be charged by electrically connecting it to a power grid using a charging interface (not shown).

Although the powertrain 200 is in FIG. 2 shown as a parallel hybrid powertrain, with both the electric machine 202 and the combustion engine 201 connected to the transmission 205, the powertrain may in other example embodiments be another type of hybrid powertrain, such as a series hybrid powertrain or a power-split hybrid powertrain. Furthermore, although the illustrated powertrain 200 comprises a single electric machine 202, it may in other example embodiments comprise two or more electric machines. The combustion engine 201 may be a diesel engine configured to use diesel as a fuel, but it may in other example embodiments be configured to use other fuels, such as bio fuel, gasoline, or hydrogen.

The EATS 100 is arranged in an exhaust flow path from the combustion engine 201. An outer casing 101 delimits the exhaust flow path and directs the exhaust flow through a number of EATS components, herein an oxidation catalyst component 102, such as a Diesel Oxidation Catalyst (DOC) component, a particulate filter (PF) 103, such as a Diesel Particulate Filter (DPF), and a Selective Catalytic Reduction (SCR) component 104. The SCR component 105 is located furthest downstream, the particulate filter 103 is located upstream of the SCR component 104, and the oxidation catalyst component 102 is located upstream of the particulate filter 103. The EATS 100 further comprises a reductant dosing device 105 for adding a reductant, such as urea, to the exhaust flow upstream of the SCR component 104, herein between the particulate filter 103 and the SCR component 104. Hence, the reductant is added and mixed with the exhaust gases immediately upstream of the SCR component 104.

The amount of reductant added by the reductant dosing device 105 is typically regulated to achieve a desired buffer of reducing agent, such as ammonia (NH₃), in the SCR component 104. A buffer target level for reducing agent is set and the amount of reductant to be added to achieve the buffer target level is set in dependence on an exhaust mass flow from the engine 201 and the SCR component temperature, in turn dependent on engine operating temperature. Models may be used to determine the amount of reductant to be dosed to achieve the buffer target level for the current operating conditions in terms of SCR component temperature and exhaust mass flow.

The illustrated EATS 100 further comprises a heater 106. The heater 106 may be an electrical heating element configured to be heated by means of electricity or by means of a burner. The heater 106 may comprise a resistive heating element, or an induction heating element, or a Positive Temperature Coefficient, PTC, based element. The heater 106 may comprise a heated component positioned in the fluid flow path, such as a lattice, a grating, a coil or a plate.

Furthermore, although not illustrated, one or more sensors, e.g., at least one temperature sensor, may be provided in the EATS 100. The temperature sensor(s) may, purely by way of example, be arranged to measure the temperature of the PF 103, the SCR component 104, and/or of the exhaust gases upstream of the DOC 102.

When the vehicle 1 is operated in a purely electrical mode, i.e., with all power necessary for driving the vehicle 1 provided from the electric machine 202, it is not necessary for the propulsion of the vehicle 1 to operate the combustion engine 201 and hence to generate any exhaust gases. When the combustion engine 201 is started, it is important for the efficiency of the various emission reduction processes taking place in the EATS 100 that the EATS is prepared for treatment of exhaust gases at the operating temperature and other engine conditions that will apply after starting. If not, undesired compounds, such as NOx, particles, and CO or unburned HC, may be present in the exhaust gases coming out from the EATS 100. In order to avoid, or at least reduce, such emissions, the EATS 100 may be conditioned prior to engine start. That is, at least a part of the EATS 100 may be prepared in such a way that the emissions during the initial operation of the engine 201 are reduced.

Furthermore, the SCR component 104 and the particulate filter 103 need to be conditioned regularly to maintain their ability to efficiently reduce hazardous emissions. For instance, the SCR component 104 stores an amount of ammonia which must be kept within certain thresholds to work optimally. Similarly, when the PF 103 is filled to a certain extent with particulate matter it loses its filtering capacity and needs to be regenerated. Regenerating the PF 103 may for example be performed by burning particulate matter by inducing a high temperature in the PF 103. Both the buffering of the ammonia storage and the regeneration of the PF require certain properties of the exhaust gases delivered to the EATS and can therefore not be performed during all operating conditions of the vehicle. For example, if the vehicle 1 is operated under low load for extended time periods, there is a risk that conditioning of the EATS 100 cannot be carried out and that the emission performance of the vehicle 1 is impaired.

The present disclosure aims to enable improved conditioning of the EATS 100 in a hybrid vehicle by predicting a power demand for the vehicle and identifying upcoming time periods that are suitable for conditioning of the EATS 100. For this purpose, an electronic control unit 150 is provided for controlling, by way of example, operation of the combustion engine 201, the electric machine 202, and the reductant dosing device 105. The electronic control unit 150 may form part of the computer system 400 as illustrated in FIG. 1. The electronic control unit 150 may preferably be located within the vehicle 1.

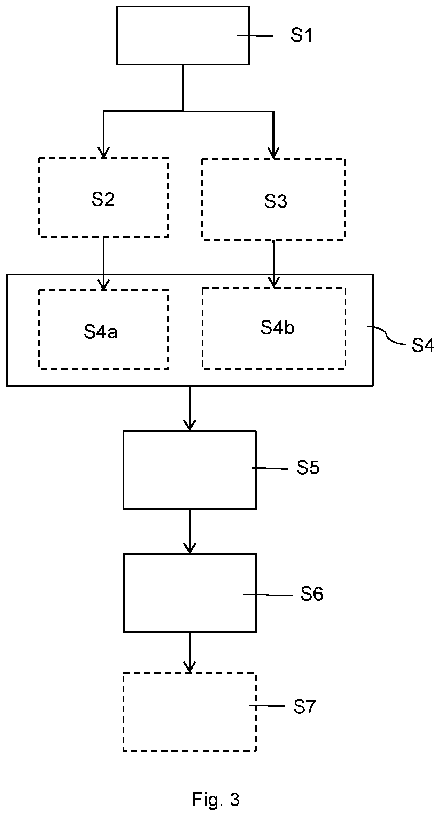

A computer-implemented method for operating a hybrid vehicle 1, such as the vehicle 1 illustrated in FIG. 1 comprising the powertrain 200 and the EATS 100 illustrated in FIG. 2, is illustrated in **FIG. 3****.** The method may be carried out by processing circuity of a computer system 400, such as within the control unit 150 illustrated in FIG. 2. The method comprises the actions illustrated in FIG. 3, wherein optional actions are illustrated with dashed lines.

**Action S1:** Predicting an upcoming power demand for propulsion of the vehicle 1 during a prediction time horizon comprising at least a first time interval. The electronic control unit 150 comprises processing circuitry configured to predict the upcoming power demand for propulsion of the vehicle 1 during the upcoming prediction time horizon comprising at least the first time interval. The prediction time horizon and the first time interval may herein be understood as intervals in terms of either time or distance, since time and travelled distance are mathematically connected through the vehicle speed. For example, the processing circuitry may be configured to predict the power request over a prediction time horizon corresponding to a planned travelling route of the vehicle, wherein the first time interval forms part of the prediction time horizon.

Predicting the upcoming power demand may comprise estimating a power demand to propel the vehicle on a first road section associated with the first time interval, based on at least one of current position data of the vehicle, topographic data for the first road section, speed limits for the first road section and driving history data for the first road section. In the prediction of the power demand, vehicle related information such as traffic information for an expected travelling route of the vehicle 1 during the prediction time horizon, terrain information for the expected travelling route during the prediction time horizon, topographic information for the expected travelling route during the prediction time horizon, weather information for the expected travelling route during the prediction time horizon, and vehicle gross weight information, may be taken into account and used for the prediction.

Hence, a route planner (not shown) may be used to predict the upcoming power demand. As an alternative or as a complement, self-adapting and/or learning algorithms may be used to predict the upcoming power demand. For instance, historical and/or statistical data relating to a power demand collected during previous transport missions may be stored in a database on-board or off-board the vehicle 1. The previous transport missions may be transport missions carried out by the vehicle itself, and/or transport missions carried out by one or more other vehicles, such as by vehicles in a vehicle fleet. The previous transport missions may be transport missions along the same travelling route. A machine learning algorithm can be formulated to extract the necessary information from such a database.

**Action S4:** Determining whether at least one predetermined condition is fulfilled. The processing circuitry is configured to determine whether the at least one predetermined condition is fulfilled. The at least one predetermined condition comprises a first condition which is fulfilled when the electric machine 202 is expected to be able to provide sufficient output power to satisfy the predicted power demand during the first time interval without using the internal combustion engine 201. In other words, the first condition is fulfilled when the predicted power demand is such that the vehicle 1 can be operated during the first time interval using purely electric power. The first time interval may correspond to an upcoming road stretch along which the at least one predetermined condition is fulfilled.

**Action S5:** During the first time interval, in response to determining that the at least one predetermined condition is fulfilled, controlling the electric machine 202 to propel the vehicle 1.

**Action S6:** During the first time interval, in response to determining that the at least one predetermined condition is fulfilled, controlling the internal combustion engine 201 to achieve a target condition for conditioning of the exhaust aftertreatment system 100.

In response to determining that the at least one predetermined condition is fulfilled, the processing circuitry is hence configured to, during the first time interval, control the electric machine 202 to propel the vehicle 1, and control the internal combustion engine 201 to achieve the target condition for conditioning of the exhaust aftertreatment system 100. Thereby, the EATS 100 may be conditioned during the first time interval, while the vehicle 1 is propelled using the electric machine 202. The EATS 100 may thereby be prepared for a restart of the combustion engine 201.

The processing circuitry may further be configured to perform an **action S2** of monitoring a state-of-charge (SoC) of the electric energy storage system 203, and to determine, in an **action S4a,** whether the first condition is fulfilled based on at least the state-of charge. In addition, a capacity of the electric machine 202 may be taken into account when determining if the at least one condition is fulfilled. For example, in a steep uphill slope and/or when the vehicle 1 is heavily loaded with goods, the electric machine 202 may not have sufficient capacity to propel the vehicle 1 on its own regardless of the SoC of the electric energy storage system 203.

The at least one predetermined condition may further comprise a second condition, which is fulfilled when a need for conditioning of the EATS 100 is detected. In order to detect the need for conditioning of the EATS 100, the processing circuitry may be configured to monitor, in an **action S3,** at least one of an amount of ammonia stored in the SCR component 104, and an amount of soot within the PF 103. Based on said monitoring, it may detect, in an **action S4b,** the need for conditioning of the EATS 100. By way of example, the processing circuitry may be configured to detect the need for conditioning of the EATS 100 by detecting that the amount of ammonia stored within the SCR component 104 is below an ammonia threshold level, or within a defined ammonia range. It may further be configured to detect the need for conditioning of the EATS 100 by detecting that the amount of soot in the PF 103 is above a soot threshold level, or within a defined soot range. Hence, upper and lower limits may be defined for the amount of soot in the PF 103 and the amount of ammonia within the SCR component 104, respectively. Too little soot within the PF 103 may lead to poor filtration, while as an excessive amount of soot may lead to soot ignition. Too little ammonia in the SCR component 104 may lead to reduced conversion efficiency of NOx within the exhaust gases, while as too much ammonia may lead to ammonia slip.

The at least one predetermined condition may further comprise a third condition, which is fulfilled when the predicted upcoming power demand is less than a maximum output power of the electric machine during the first time interval. This is related to the capacity of the electric machine as discussed above.

The target condition may be a condition suitable for regeneration of the particulate filter 103. This may be a condition that triggers a regeneration event, such as a certain mass flow of exhaust gases and/or a certain temperature that leads to passive regeneration, e.g., by favoring formation of NO₂ in the DOC component 102. The formed NO₂ is used in the passive regeneration of the PF 103 downstream of the DOC component 102.

The target condition may alternatively or additionally be a condition suitable for buffering of ammonia in the SCR component 104, such as a certain temperature and/or a certain mass flow resulting in favorable conditions for buffering of ammonia.

The target condition may be reached by controlling the internal combustion engine 201 to achieve at least one of a target mass flow of exhaust gases through the exhaust aftertreatment system, a target temperature within the exhaust aftertreatment system, a target NOx content of the exhaust gases, and a target oxygen content of the exhaust gases. Engine parameters that may be controlled include, for example, a rotational speed of the internal combustion engine 201, an amount of exhaust gas recirculation to the internal combustion engine 201, a throttle position, a fuel injection timing, and an amount of injected fuel per fuel injection. For example, to achieve conditions suitable for regeneration of the PF 103, the internal combustion engine 201 may be controlled to provide a temperature within the DOC component 102 at which the NO to NO₂ oxidation is promoted. Hereby, the increased amount of NO₂ flowing into the PF 103 may in turn increase the passive soot regeneration within the PF 103. In other examples, a post-injection of fuel may be carried out to perform an active regeneration of the PF 103. To achieve conditions suitable for buffering of ammonia, the internal combustion engine 201 may be controlled to achieve a temperature within the EATS 100 and a mass flow of exhaust gases that allows an increased dosing of urea to rapidly increase the amount of ammonia within the SCR component 104.

The processing circuitry may further be configured to control the heater 106. By way of example, it may be configured to, in an **action S7,** activate the heater 106 during the first time interval to reach a target temperature suitable for at least one of PF regeneration and buffering of ammonia within the SCR component 104. This may be performed in addition to controlling the combustion engine 201 to reach the target condition.

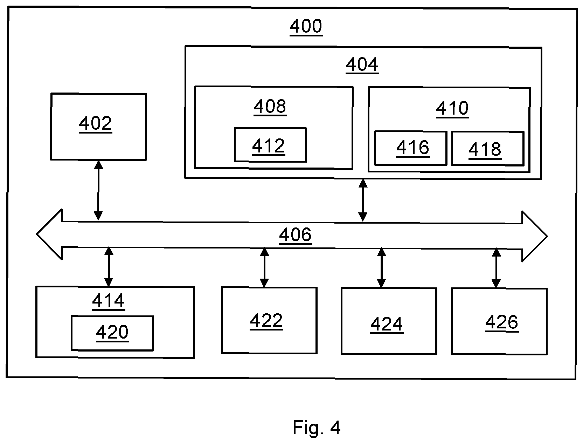

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units, such as the control unit 150 illustrated in FIG. 2), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., randomaccess memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, possible features and feature combinations of the present disclosure are presented as a list of numbered Examples.

Example 1: A computer system (400) for operating a hybrid vehicle (1) comprising an internal combustion engine (201), an electric machine (202), and an exhaust aftertreatment system (10), the computer system comprising processing circuitry (402) configured to:
predict an upcoming power demand for propulsion of the vehicle during an upcoming prediction time horizon comprising at least a first time interval,
determine whether at least one predetermined condition is fulfilled, the at least one predetermined condition comprising a first condition which is fulfilled when the electric machine is expected to be able to provide sufficient output power to satisfy the predicted power demand during the first time interval without using the internal combustion engine,
during the first time interval, in response to determining that the at least one predetermined condition is fulfilled, control the electric machine to propel the vehicle, and control the internal combustion engine to achieve a target condition for conditioning of the exhaust aftertreatment system.

Example 2: The computer system of example 1, wherein the vehicle further comprises an electric energy storage system (203) configured to power the electric machine, and wherein the processing circuitry is further configured to:
monitor a state-of-charge of the electric energy storage system (203),
determine whether the first condition is fulfilled based on at least the state-of-charge.

Example 3: The computer system of any of examples 1-2, wherein the at least one predetermined condition further comprises a second condition which is fulfilled when a need for conditioning of the exhaust aftertreatment system is detected.

Example 4: The computer system of any of examples 1-3, wherein the processing circuitry is further configured to:
monitor at least one of an amount of ammonia stored in a selective catalytic reduction component (104) of the exhaust aftertreatment system, and an amount of soot within a particulate filter (103) of the exhaust aftertreatment system, and based on said monitoring, detect the need for conditioning of the exhaust aftertreatment system.

Example 5: The computer system of example 4, wherein the processing circuitry is further configured to detect the need for conditioning by detecting that the amount of ammonia stored within the selective catalytic reduction component (104) is below an ammonia threshold level, or within a defined ammonia range, and/or by detecting that the amount of soot is above a soot threshold level, or within a defined soot range.

Example 6: The computer system of any of the preceding examples, wherein the exhaust aftertreatment system (100) comprises a particulate filter (103), and wherein the target condition is a condition suitable for regeneration of the particulate filter.

Example 7: The computer system of any of the preceding examples, wherein the exhaust aftertreatment system comprises a selective catalytic reduction component (104), and wherein the target condition is a condition suitable for buffering of ammonia in the selective catalytic reduction component.

Example 8: The computer system of any of the preceding examples, wherein the processing circuity is configured to control the internal combustion engine to achieve the target condition by controlling the internal combustion engine to achieve at least one of a target mass flow of exhaust gases through the exhaust aftertreatment system, a target temperature within the exhaust aftertreatment system, a target NOx content of the exhaust gases, and a target oxygen content of the exhaust gases.

Example 9: The computer system of any of the preceding examples, wherein the processing circuity is further configured to:
during the first time interval, activate a heater (106) to heat the exhaust aftertreatment system (100) to reach a target temperature.

Example 10: A vehicle (1) comprising an internal combustion engine (201), an electric machine (202), an exhaust aftertreatment system (100), and the computer system (400) of any of examples 1-9.

Example 11: The vehicle of example 10, further comprising an electric energy storage system (203) configured to power the electric machine.

Example 12: A computer-implemented method for operating a hybrid vehicle (1) comprising an internal combustion engine (201), an electric machine (202), and an exhaust aftertreatment system (100), the method comprising:
predicting (S 1), by processing circuitry (402) of a computer system (400), an upcoming power demand for propulsion of the vehicle during a prediction time horizon comprising at least a first time interval,
determining (S4), by the processing circuitry, whether at least one predetermined condition is fulfilled, the at least one predetermined condition comprising a first condition which is fulfilled when the electric machine is expected to be able to provide sufficient output power to satisfy the predicted power demand during the first time interval without using the internal combustion engine,
during the first time interval, in response to determining that the at least one predetermined condition is fulfilled, controlling (S5), by the processing circuitry, the electric machine to propel the vehicle, and controlling (S6), by the processing circuitry, the internal combustion engine to achieve a target condition for conditioning of the exhaust aftertreatment system.

Example 13: The method of example 12, wherein the vehicle further comprises an electric energy storage system (203) configured to power the electric machine, and wherein the method further comprises, by the processing circuitry:
monitoring (S2) a state-of-charge of the electric energy storage system (),
determining (S4a) whether the first condition is fulfilled based on at least the state-of-charge.

Example 14: The method of example 12 or 13, wherein the at least one predetermined condition further comprises a second condition which is fulfilled when a need for conditioning of the exhaust aftertreatment system is detected.

Example 15: The method of any of examples 12-14, further comprising:
monitoring (S3), by the processing circuitry, at least one of an amount of ammonia stored within a selective catalytic reduction component of the exhaust aftertreatment system, and an amount of soot within a particle filter of the exhaust aftertreatment system, and based on said monitoring, detecting (S4b), by the processing circuitry, the need for conditioning of the exhaust aftertreatment system.

Example 16: The method of example 15, wherein the need for conditioning is detected when the amount of ammonia stored within the selective catalytic reduction component is below an ammonia threshold level, or within a defined ammonia range, and/or when the amount of soot is above a soot threshold level, or within a defined soot range.

Example 17: The method of any of examples 12-16, wherein the aftertreatment system comprises a particulate filter, and wherein the target condition is a condition suitable for regeneration of the particulate filter.

Example 18: The method of any of examples 12-17, wherein the aftertreatment system comprises a selective catalytic reduction component, and wherein the target condition is a condition suitable for buffering of ammonia in the selective catalytic reduction component.

Example 19: The method of any of examples 12-18, wherein controlling the internal combustion engine to achieve the target condition comprises controlling the internal combustion engine to achieve at least one of a target mass flow of exhaust gases through the exhaust aftertreatment system, a target temperature within the exhaust aftertreatment system, a target NOx content of the exhaust gases, and a target oxygen content of the exhaust gases.

Example 20: The method of any of examples 12-19, further comprising:
during the first time interval, activating (S7), by the processing circuitry, a heater to heat the exhaust aftertreatment system (100) to reach a target temperature.

Example 21: The method of example 13, wherein determining that the first condition is fulfilled comprises determining that the state-of-charge of the electric energy storage system is sufficient to meet the predicted power demand during the first time interval.

Example 22: The method of any of examples 12-21, wherein predicting the upcoming power demand comprises estimating a power demand to propel the vehicle on a first road section associated with the first time interval, based on at least one of current position data of the vehicle, topographic data for the first road section, speed limits for the first road section and driving history data for the first road section.

Example 23: The method of any of examples 12-22, wherein the at least one predetermined condition further comprises a third condition, which is fulfilled when the predicted upcoming power demand is less than a maximum output power of the electric machine during the first time interval.

Example 24: The method according to any one of examples 12-23, wherein controlling the internal combustion engine to achieve the target condition comprises at least one of:
- controlling a rotational speed of the internal combustion engine,
- controlling an amount of exhaust gas recirculation to the internal combustion engine,
- controlling a throttle position,
- controlling a fuel injection timing,
- controlling an amount of injected fuel.

Example 25: A computer program product comprising program code for performing, when executed by the processing circuitry, the method of any of examples 12-24.

Example 26: A non-transitory computer-readable storage medium comprising instructions, which when executed by the processing circuitry, cause the processing circuitry to perform the method of any of examples 12-24.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (400) for operating a hybrid vehicle (1) comprising an internal combustion engine (201), an electric machine (202), and an exhaust aftertreatment system (10), the computer system comprising processing circuitry (402) configured to:
predict an upcoming power demand for propulsion of the vehicle (1) during an upcoming prediction time horizon comprising at least a first time interval,
determine whether at least one predetermined condition is fulfilled, the at least one predetermined condition comprising a first condition which is fulfilled when the electric machine (202) is expected to be able to provide sufficient output power to satisfy the predicted power demand during the first time interval without using the internal combustion engine (201),
during the first time interval, in response to determining that the at least one predetermined condition is fulfilled, control the electric machine (202) to propel the vehicle (1), and control the internal combustion engine (201) to achieve a target condition for conditioning of the exhaust aftertreatment system (100).

2. The computer system of claim 1, wherein the vehicle further comprises an electric energy storage system (203) configured to power the electric machine (202), and wherein the processing circuitry is further configured to:
monitor a state-of-charge of the electric energy storage system (203),
determine whether the first condition is fulfilled based on at least the state-of-charge.

3. The computer system of any of claims 1-2, wherein the at least one predetermined condition further comprises a second condition which is fulfilled when a need for conditioning of the exhaust aftertreatment system (100) is detected.

4. The computer system of any of claims 1-3, wherein the processing circuitry is further configured to:
monitor at least one of an amount of ammonia stored in a selective catalytic reduction component (104) of the exhaust aftertreatment system (100), and an amount of soot within a particulate filter (103) of the exhaust aftertreatment system (100), and based on said monitoring, detect the need for conditioning of the exhaust aftertreatment system (100).

5. The computer system of claim 4, wherein the processing circuitry is further configured to detect the need for conditioning by detecting that the amount of ammonia stored within the selective catalytic reduction component (104) is below an ammonia threshold level, or within a defined ammonia range, and/or by detecting that the amount of soot is above a soot threshold level, or within a defined soot range.

6. The computer system of any of the preceding claims, wherein the exhaust aftertreatment system (100) comprises a particulate filter (103), and wherein the target condition is a condition suitable for regeneration of the particulate filter (103).

7. The computer system of any of the preceding claims, wherein the exhaust aftertreatment system (100) comprises a selective catalytic reduction component (104), and wherein the target condition is a condition suitable for buffering of ammonia in the selective catalytic reduction component (104).

8. The computer system of any of the preceding claims, wherein the processing circuity is configured to control the internal combustion engine (201) to achieve the target condition by controlling the internal combustion engine (201) to achieve at least one of a target mass flow of exhaust gases through the exhaust aftertreatment system (100), a target temperature within the exhaust aftertreatment system (100), a target NOx content of the exhaust gases, and a target oxygen content of the exhaust gases.

9. The computer system of any of the preceding claims, wherein the processing circuity is further configured to:
during the first time interval, activate a heater (106) to heat the exhaust aftertreatment system (100) to reach a target temperature.

10. A vehicle (1) comprising an internal combustion engine (201), an electric machine (202), an exhaust aftertreatment system (100), and the computer system (400) of any of claims 1-9.

11. The vehicle of claim 10, further comprising an electric energy storage system (203) configured to power the electric machine (202).

12. A computer-implemented method for operating a hybrid vehicle (1) comprising an internal combustion engine (201), an electric machine (202), and an exhaust aftertreatment system (100), the method comprising:
predicting (S 1), by processing circuitry (402) of a computer system (400), an upcoming power demand for propulsion of the vehicle (1) during a prediction time horizon comprising at least a first time interval,
determining (S4), by the processing circuitry, whether at least one predetermined condition is fulfilled, the at least one predetermined condition comprising a first condition which is fulfilled when the electric machine (202) is expected to be able to provide sufficient output power to satisfy the predicted power demand during the first time interval without using the internal combustion engine (201),
during the first time interval, in response to determining that the at least one predetermined condition is fulfilled, controlling (S5), by the processing circuitry, the electric machine (202) to propel the vehicle (1), and controlling (S6), by the processing circuitry, the internal combustion engine (201) to achieve a target condition for conditioning of the exhaust aftertreatment system (100).

13. The method of claim 12, wherein the vehicle (1) further comprises an electric energy storage system (203) configured to power the electric machine (202), and wherein the method further comprises, by the processing circuitry:
monitoring (S2) a state-of-charge of the electric energy storage system (203),
determining (S4a) whether the first condition is fulfilled based on at least the state-of-charge.

14. A computer program product comprising program code for performing, when executed by the processing circuitry, the method of any of claims 12-13.

15. A non-transitory computer-readable storage medium comprising instructions, which when executed by the processing circuitry, cause the processing circuitry to perform the method of any of claims 12-13.
